# EUROPEAN PATENT SPECIFICATION

(11) **EP 3 064 112 B1**
(45) Date of publication and mention of the grant of the patent: **31.05.2017**
(21) Application number: 14906146.7
(22) Date of filing: 24.11.2014
(51) Int. Cl.: A47K 3/30

(54) **LOCKING DEVICE AND SHOWER ROOM ASSEMBLY**
VERRIEGELUNGSVORRICHTUNG UND DUSCHRAUMANORDNUNG
DISPOSITIF DE VERROUILLAGE ET ENSEMBLE DE SALLE DE DOUCHE

(43) Date of publication of application: 07.09.2016
(73) Proprietor: Ideal Sanitary Ware Co., Ltd., Foshan, Guangdong 528225 (CN)
(72) Inventor: WEI, Wuxiang, Foshan, Guangdong 528255 (CN)
(74) Representative: Morris, Jonathan Paul
(86) International application number: PCT/CN2014/092024
(87) International publication number: WO 2016/082072

(56) References cited:
- EP-A1- 0 327 154
- EP-A2- 2 382 905
- CN-U- 203 175 264
- CN-U- 203 308 298
- DE-U1-202013 101 519
- GB-A- 2 440 605
- US-A1- 2002 134 463
- US-A1- 2002 157 318

## Description

### Technical Field

The present invention relates to a small structure for a special purpose built in a building, and particularly to a locking device and a shower room assembly using the locking device.

### Background Art

Shower rooms can be divided into an integral type and a partitioned type according to their structures. A partitioned shower room is a shower space partitioned from a washing room or other buildings by a frame comprising a wall and/or a door being constituted of glass. The frame comprising glass in the present invention is named as a shower room assembly. Usually a shower room assembly is positioned using at least two walls of other buildings and a ground. In other words, usually a shower room assembly is installed against walls; the ground is the reference plane; and the installed shower room assembly should be vertical relative to the ground.

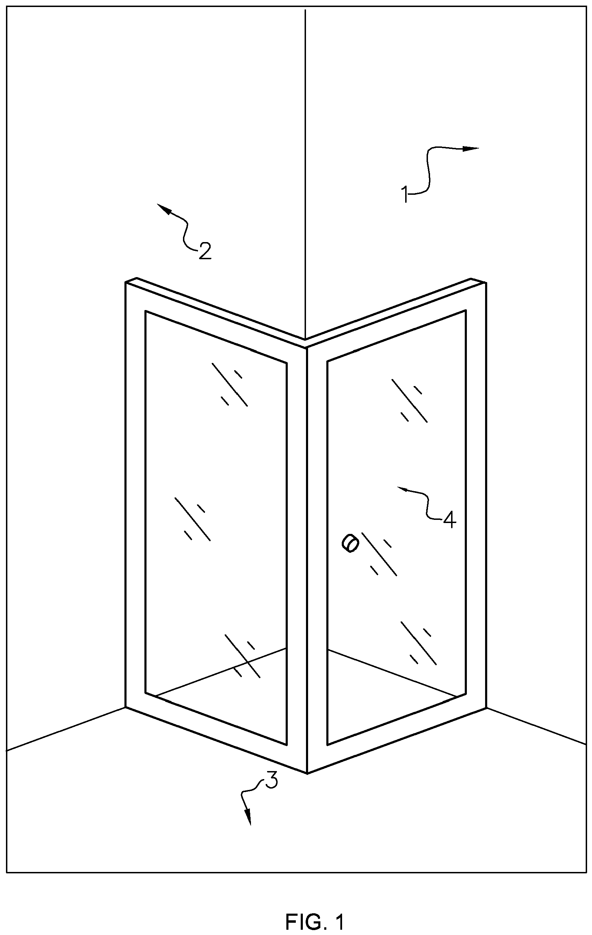

Referring to Figure 1, a shower room is separated from a building space including walls 1 and 2 perpendicular with each other and a ground 3 by a shower room assembly 4. The shower room assembly 4 is consisted of a frame and a glass wall and a door that are fixed in the frame. The glass door shown in Figure 1 may be a general door or a rail-type sliding door. It should be noted that a projection of the shower room assembly in Figure 1 on the ground is right-angled, while some of the projections in the prior arts are arcuate. In addition, a pair of walls 1 and 2 perpendicular with each other are used in Figure 1, while some shower rooms are separated using a pair of parallel walls in the prior arts, in which case a projection of the shower room assembly on the ground is a horizontal line.

CN203175264U discloses a locking device according to the preamble of claim 1.

### Technical Problem

However, walls of buildings sometimes are not perpendicular with the ground. Due to various reasons, the angle between a wall and the ground has a deviation of about 1 degree. If the shower room assembly is installed completely along the walls, opening and closing of the door of the shower room assembly may be affected. Therefore, when installing the shower room assembly, distances between the upper and/or lower ends of the shower room assembly and the wall should be adjusted, so that the door is in the perpendicular position.

To realize such adjustment, an existing shower room assembly is usually designed to include a fixing frame to be fixed to the wall surface and an adjusting frame to be connected with the door panel (such as a glass panel). When installing, the fixing frame is fixed against the wall; then, vertical frames of the adjusting frame are moved to approach the fixing frame; distances between the fixing frame and upper and lower ends of the vertical frames are adjusted, so that the vertical frames are in the perpendicular positions, and the door panel is also in the perpendicular position; finally, holes are drilled on the vertical frames and the fixing frame, and screws or the like are used to fasten the frames.

However, on one hand, drilling needs at least two people working together and consumes a long time; on the other hand, drilling may destroy frame surfaces which are usually made of aluminum, so that the appearance of the product or even the whole product is scrapped, causing losses to users or manufacturers.

### Technical Solution

The main objective of the invention is to provide a locking device that is easy to lock quickly.

Another objective of the invention is to provide a shower room assembly that can be installed quickly and can effectively prevent damages in the installation process.

To realize the above main objective of the invention, the invention provides a locking device comprising a locking assembly and an adjusting member. The locking assembly comprises a fixing member, a locking member and a wrench body. The fixing member comprises a rotating chamber. The locking member comprises a shaft head portion, a driving wing portion, a main rod portion and a locking head portion sequentially arranged along an axis of the locking member, and is rotatably fixed on the fixing member relative to the fixing member, wherein the driving wing portion is located in the rotating chamber, and the locking head portion extends out of the fixing member and is provided with a locking protrusion, an outer profile of which is rectangular or oblong in a cross section view. The wrench body is hinged near the rotating chamber, and has a hand-held portion at one side of a hinge, a first projection perpendicular with the hand-held portion at the other side of the hinge, and a second projection extending in a direction parallel with the wrench body at the other side of the hinge, wherein when the wrench body is at a first position, the first projection restricts the driving wing portion at a first angular position; when the wrench body is at a second position perpendicular with the first position, the second projection drives the driving wing portion to rotate to a second angular position that is at 90 degrees with the first angular position. The adjusting member comprises a fixing portion and an adjusting body extending outwards from the fixing portion, wherein a plastic passage opening outwards is formed in the adjusting body. When the driving wing portion is at the second angular position, the locking head portion is in clearance fit with the passage. When the driving wing portion is at the first angular position, the locking protrusion is meshed into the passage.

According to a specific solution, a wall of the fixing portion is provided with a guiding portion to be in tight fit with a slideway.

According to another specific solution, the driving wing portion has a semi-cylindrical cross section or an equilateral angle steel-like cross section, and the first and second projections are alternately arranged along an axis of the hinge.

According to yet another specific solution, the locking protrusion is a set of raised lines that extend circumferentially along a short side surface or a large curvature surface and are axially and evenly distributed.

According to yet another specific solution, the raised line has a triangular cross section.

According to yet another specific solution, the locking protrusion comprises tapers that extend outwards and radially and are evenly distributed on the short side surface or the large curvature surface.

To realize another objective of the invention, the invention provides a shower room assembly comprising a fixing frame and an adjusting frame, the fixing frame being a section bar. The adjusting frame comprises both a transverse frame and a vertical frame that are section bars, the vertical frame being inserting-connected with the fixing frame in a transverse direction. The transverse frame comprises a vertical wall provided with a wrench body operating window. The shower room assembly further comprises a locking device that comprises a locking assembly and an adjusting member. The locking assembly comprises a fixing member, a locking member and a wrench body. The fixing member comprises a rotating chamber. The locking member comprises a shaft head portion, a driving wing portion, a main rod portion and a locking head portion sequentially arranged along an axis of the locking member, and is rotatably fixed on the fixing member relative to the fixing member, wherein the driving wing portion is located in the rotating chamber, and the locking head portion extends out of the fixing member and is provided with a locking protrusion, an outer profile of which is rectangular or oblong in a cross section view. The wrench body is hinged near the rotating chamber, and has a hand-held portion at one side of a hinge, a first projection perpendicular with the hand-held portion at the other side of the hinge, and a second projection extending in a direction parallel with the wrench body at the other side of the hinge, wherein when the wrench body is at a first position, the first projection restricts the driving wing portion at a first angular position; when the wrench body is at a second position perpendicular with the first position, the second projection drives the driving wing portion to rotate to a second angular position that is at 90 degrees with the first angular position. The locking assembly is fixed to a vertical wall by the fixing member of the locking assembly. The adjusting member comprises a fixing portion to be fixed at an end of the fixing frame, and an adjusting body extending from the fixing portion towards the transverse frame, wherein a plastic passage opening outwards is formed in the adjusting body. When the driving wing portion is at the second angular position, the locking head portion is in clearance fit with the passage. When the driving wing portion is at the first angular position, the locking protrusion is meshed into the passage.

According to a specific solution, a side wall of a chamber close to an installation wall is provided with a slideway, and a guiding portion is provided on a wall of the fixing portion corresponding to the slideway to be in tight fit with the slideway. The transverse frame comprises an enclosed chamber formed by a part of the vertical wall and extending vertically and a semi-open chamber located on the other side of the enclosed chamber. The fixing member is fixed in the enclosed chamber.

According to another specific solution, the driving wing portion has a semi-cylindrical cross section or an equilateral angle steel-like cross section, and the first and second projections are alternately arranged along an axis of the hinge.

According to yet another specific solution, the locking protrusion is a set of raised lines that extend circumferentially along a short side surface or a large curvature surface and are axially and evenly distributed, and the raised line has a triangular cross section.

### Advantageous Effects

The shower room assembly provided by the invention is suitable for operations on a construction site, can be quickly installed to save manpower and materials and is hard to damage.

### Brief Description of the Drawings

Figure 1 is a schematic view of an existing shower room assembly installed in a building;
Figure 2 is a perspective view of a shower room assembly according to one embodiment of the present invention;
Figure 3 is a structural decomposition view of some members at one side along a line formed by nodes B and D in Figure 2;
Figure 4 is a perspective view of a fixing frame at node B in Figure 2;
Figure 5 is a perspective view of the fixing frame in Figure 4 from another angle of view;
Figure 6 is a perspective view of a transverse frame at node B in Figure 3;
Figure 7 is a perspective view of a vertical frame in Figure 3;
Figure 8 is an enlarged perspective view of a locking device in an assembled but not locked position;
Figure 9 is a perspective view of an adjusting member in Figure 8;
Figure 10 is a perspective view of a locking assembly in Figure 8;
Figure 11 is a perspective view of a first fixing member in Figure 10;
Figure 12 is a perspective view of a second fixing member in Figure 10;
Figure 13 is a perspective view of a locking member in Figure 10;
Figure 14 is a perspective view of the locking member from another angle of view;
Figure 15 is a perspective view of a rotating wrench in Figure 10;
Figure 16 is a perspective view of the rotating wrench in Figure 15 from another view;
Figure 17 is a schematic view when the rotating wrench is at a second position and a rotating wing is at a second angular position;
Figure 18 is a schematic view when the rotating wrench is at a first position and a rotating wing is at a first angular position;
Figure 19 is a perspective view before an adjusting frame is mounted to a fixing frame;
Figure 20 is a perspective view when an adjusting frame is mounted to a fixing frame and is in an adjusting state;
Figure 21 is a perspective view when an adjusting frame is adjusted and locked.

### Preferred Embodiments

The present invention is described in detail with reference to the embodiments of the shower room assembly of the present invention and the accompanying drawings. Embodiments of the locking device are also described in detail.

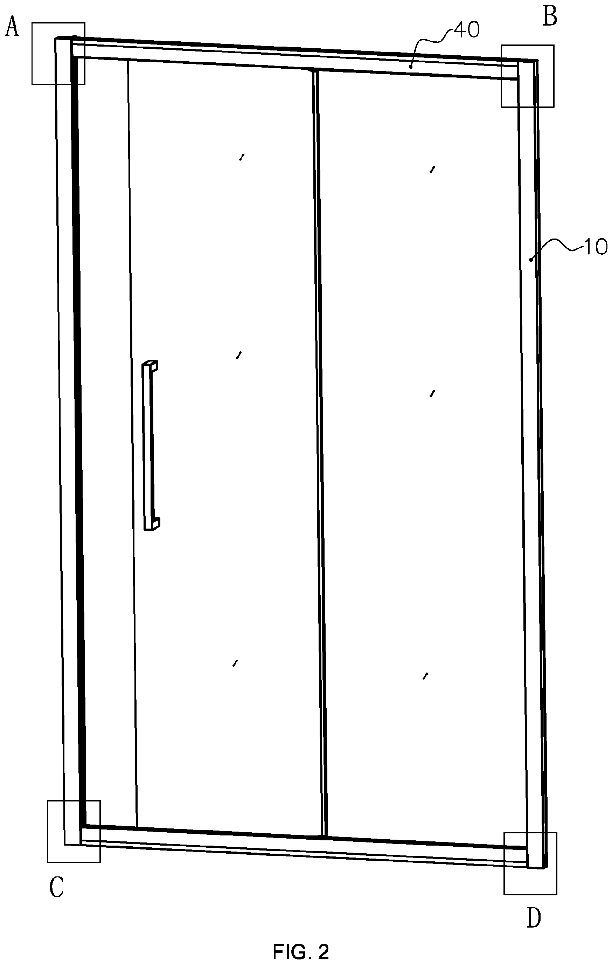

Referring to Figure 2, this embodiment shows a transverse line-shaped shower room assembly. Locking devices are mounted at four nodes A, B, C and D of the shower room assembly respectively. The locking device is used to quickly connect and fix the fixing frame 10 with the adjusting frame. The adjusting frame is formed by upper and lower transverse frames 40 and two vertical frames connecting and fixing together. A glass door is mounted in the adjusting frame.

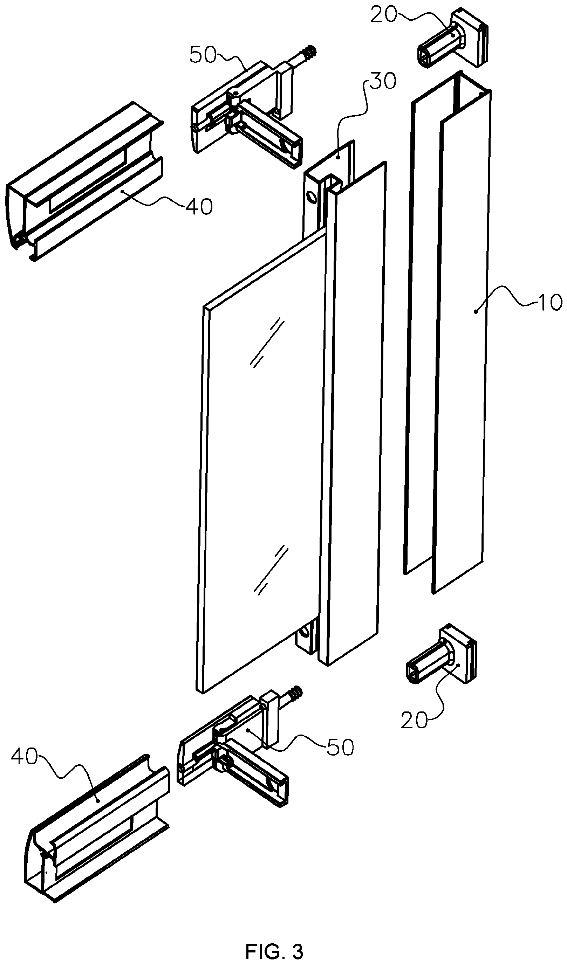

Referring to Figure 3, the locking device is consisted of the locking assembly 50 and the adjusting member 20. The locking assembly 50 is mounted to the transverse frames 40. The adjusting member 20 is mounted to the fixing frames 10. Glass and a glass door are mounted between the transverse frames 40 and the vertical frames 30.

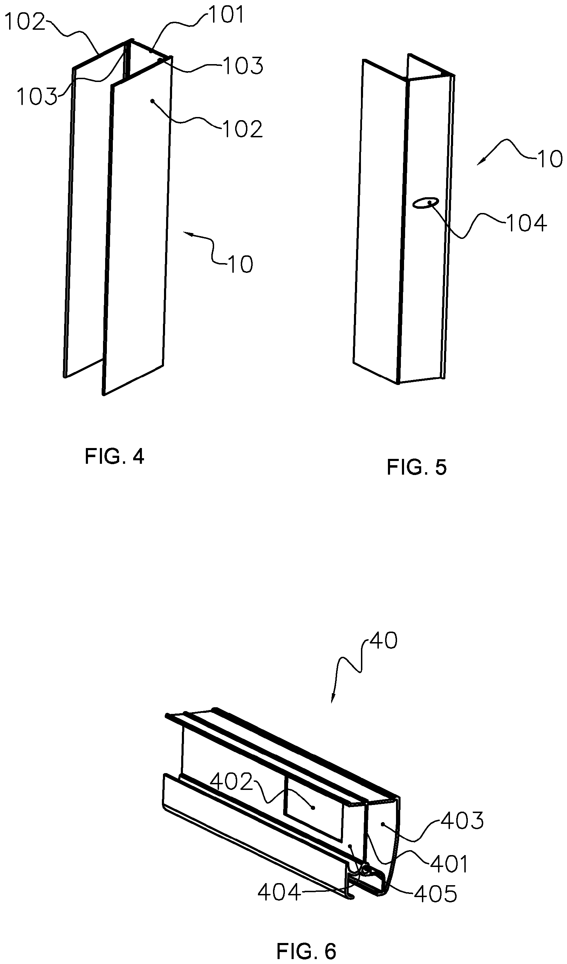

Referring to Figures 4 and 5, the fixing frame 10 is a section bar, which, when seen from a cross section view, comprises a chamber enclosed by the installation wall 101 and two sidewalls 102 and having an opening. A slideway 103 is provided to the sidewalls close to the installation wall. Several oblong holes 104 are provided to the installation wall 101 for fixing the fixing frames 10 to the wall through fasteners.

Referring to Figure 6, the transverse frame 40 is a section bar and includes a vertical wall 401 which is provided with a wrench body operating window 402. On the right side of the vertical wall 401 is provided with an enclosed chamber 403 extending vertically; on the left side thereof a semi-open chamber 404. The vertical wall 401 is also provided with screw holes 405 for fixing self-tapping screws.

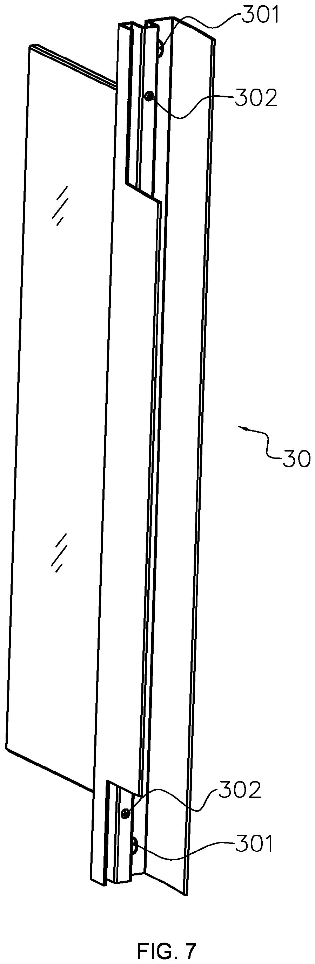

Referring to Figure 7, the vertical frame 30 is a section bar and comprises a glass installation groove. A through hole 301 for a locking head portion to pass through and an unthreaded hole 302 for connecting the locking assembly 50 are machined at an end of the vertical frame 30.

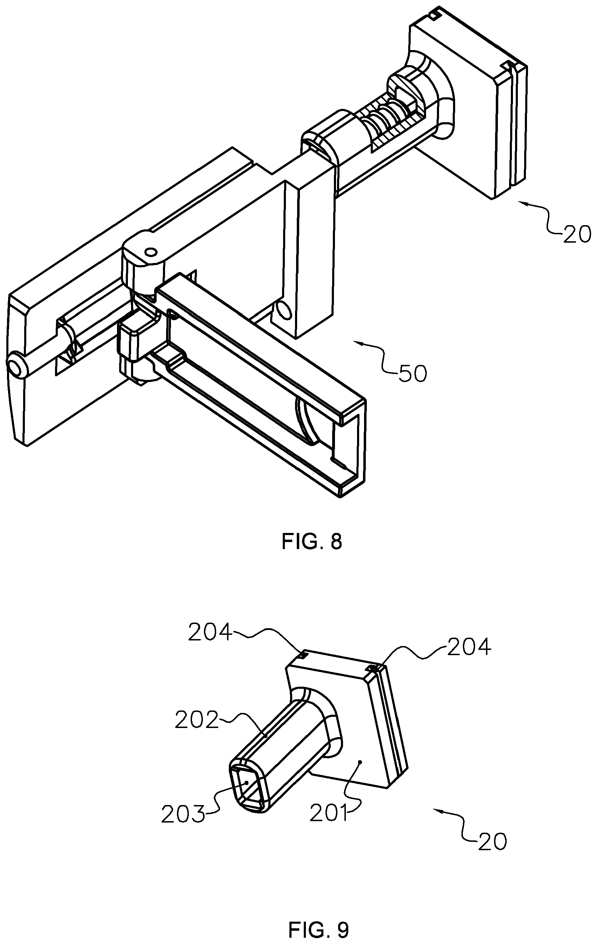

Referring to Figure 8, the locking device comprises the locking assembly 50 and the adjusting member 20. Mating parts of the locking assembly 50 and the adjusting member 20 are sectioned in Figure 8.

Referring to Figure 9, the adjusting member 20 comprises a fixing portion 201 and an adjusting body 202 extending outwards from the fixing portion 201, wherein a plastic passage 203 opening outwards is formed in the adjusting body 202. The passage 203 has a rectangular or oblong cross section. When the adjusting member 20 is made of a plastic material such as nylon, the passage 203 naturally has plasticity; when the adjusting member 20 is made of a rigid material such as metal, plasticity of the passage 203 may be obtained by fixing a tube made of a plastic material and having certain wall thickness in a rectangular or oblong hole having a relatively large dimension. A guiding portion 204 is provided on a wall of the fixing portion 201 to be in tight fit with the slideway 103, such that the adjusting member 20 may be mounted at end portions of the fixing frames 10.

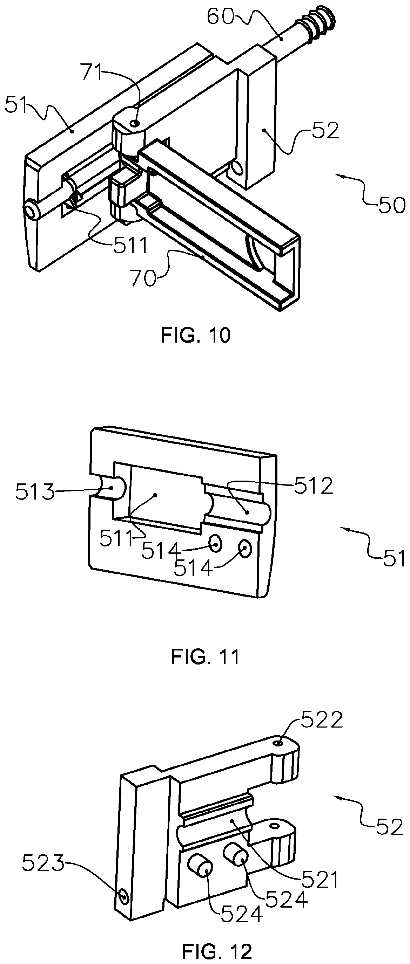

Referring to Figure 10, the locking assembly 50 comprises a fixing member, a locking member 60 and a wrench body 70. For the sake of manufacturability, the fixing member comprises a fixing block 51 and a fixing block 52 combined together and a rotating chamber 511. The locking member 60 may be rotatably fixed on the fixing member, and the wrench body 70 is hinged near the rotating chamber 511 by a hinge 71.

Referring to Figure 11, the fixing block 51 comprises co-axial semi-circular axial holes 512, 513 provided at the two ends of the rotating chamber 511, and a pinhole 514 provided on an engaging surface with the fixing block 52.

Referring to Figure 12, the fixing block 52 comprises a semi-circular axial hole 521 to cooperate with the semi-circular axial holes 512, a pin 524 to cooperate with the pinhole 514, an unthreaded hole 523 for fixing the fixing member to the vertical wall 401 of the transverse frame 40, and a hole 522 for fixing a hinge shaft of the hinge 71.

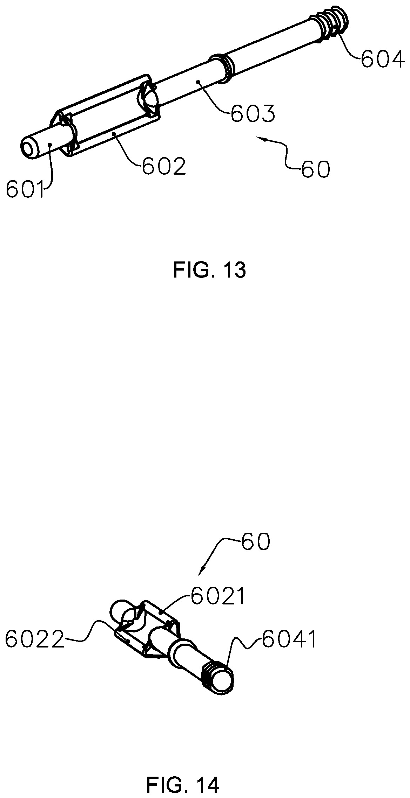

Referring to Figures 13 and 14, the locking member 60 comprises a shaft head portion 601, a driving wing portion 602, a main rod portion 603 and a locking head portion 604 sequentially arranged along an axis of the locking member 60. The driving wing portion 602 comprises a pair of wings 6021, 6022 provided at the two sides in the axial direction. The locking head portion 604 is provided with raised lines 6041 that are evenly distributed in the axial direction. When seen from the sectional view, the raised lines 6041 have oblong profiles, and tops thereof are distributed on a large curvature side of the oblong. The raised lines 6041 have a triangular cross section.

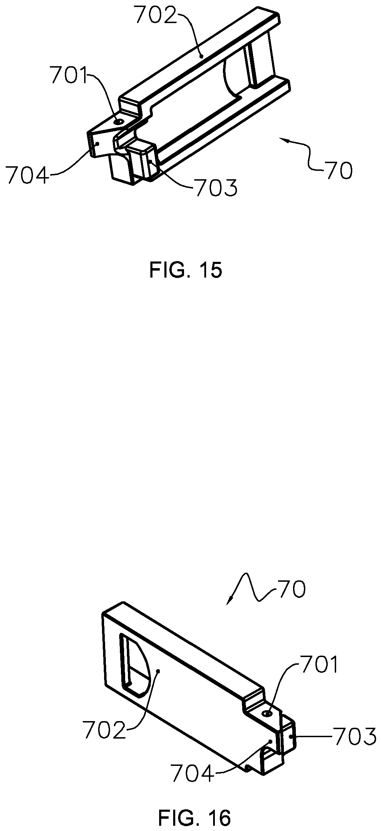

Referring to Figures 15 and 16, the wrench body 70 comprises a hinge hole 701, a hand-held portion 702 at one side of the hinge holes 701, a first projection 703 perpendicular with the hand-held portion 702 at the other side of the hinge holes 701, and a second projection 704 extending in a direction parallel with the wrench body at the other side of the hinge holes 701. The first and second projections 703 and 704 are alternately arranged in an axial direction of the hinge holes 701.

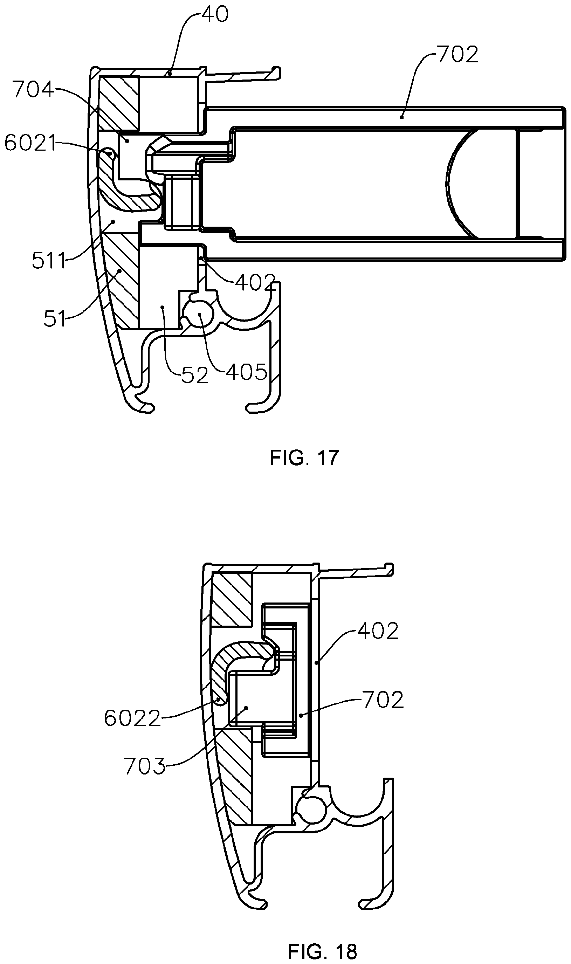

Referring to Figure 17, the assembled fixing blocks 51, 52 are installed in the enclosed chamber 403 of the transverse frame 40, and pass the unthreaded hole 302 of the vertical frame 30 and the unthreaded hole 523 of the fixing block 52 through a screw to fix the fixing block 52 at the screw hole 405 of the transverse frame 40, thereby connecting and fixing the vertical frame 30, the locking assembly 50 and the transverse frame 40 together. The wrench body 70 is located at the wrench body operating window 402. When the wrench body 70 is at the second position shown in Figure 17, the second projection 704 restricts the wing 6021 of the driving wing portion at the second angular position, whereby the locking head portion 604 and the passage 203 are in clearance fit as shown in the partial sectional view of Figure 8, that is, the locking head portion 604 can move axially relative to the passage 203.

Referring to Figure 18, after the adjusting frame is adjusted to a desirable state relative to the fixing frame 10 and overcomes the defects such as non-vertical walls, the hand-held portion 702 may be operated such that the wrench body 70 is rotated to the first position shown in Figure 18, whereupon the first projection 703 restricts the wing 6022 of the driving wing portion at the first angular position, that is, the locking member 60 rotates by 90 degrees around its own axis. Accordingly, the raised lines 6041 on the locking head portion 604 are meshed with an inner wall of the plastic passage 203, such that the locking head portion 604 is relatively fixed in the axial direction with respect to the passage 203.

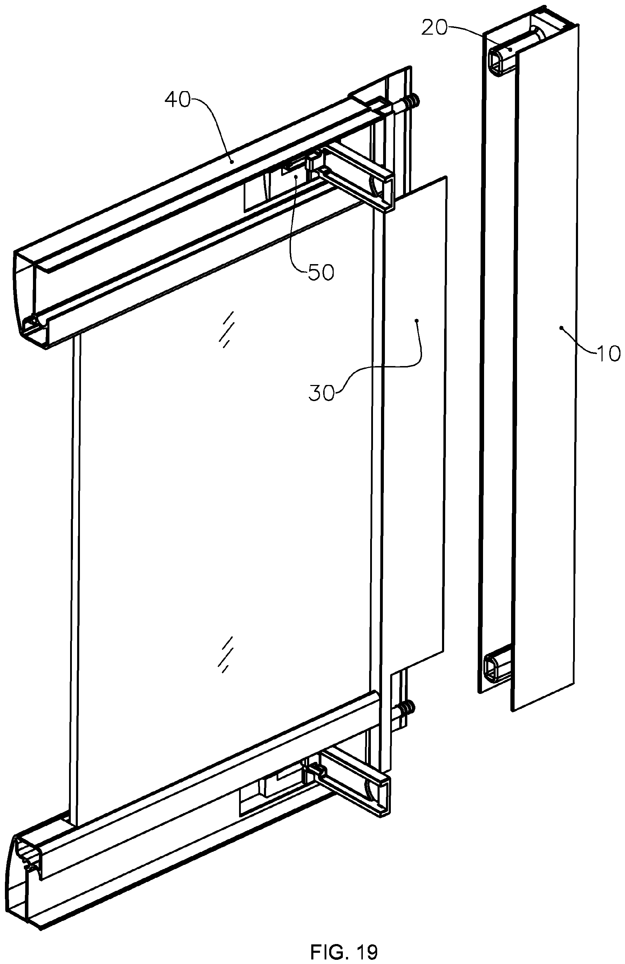

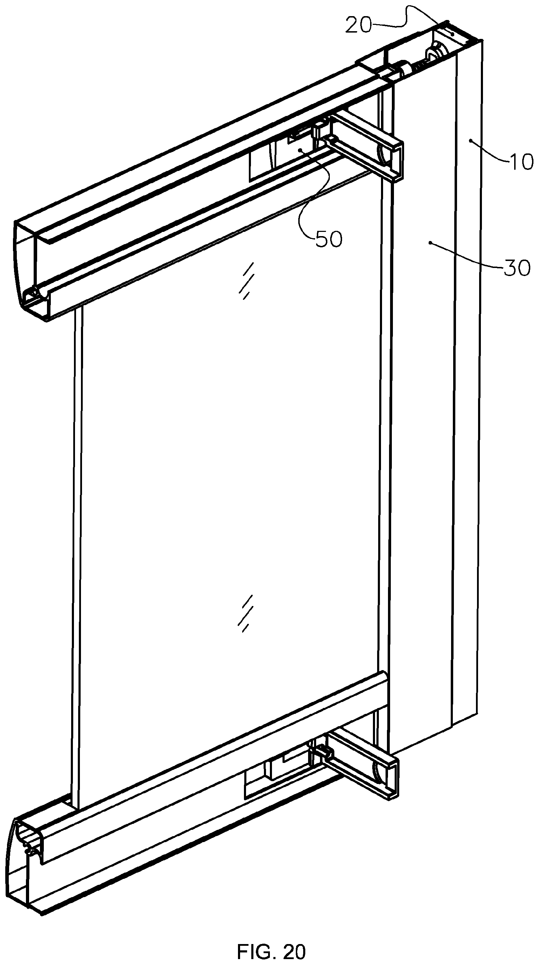

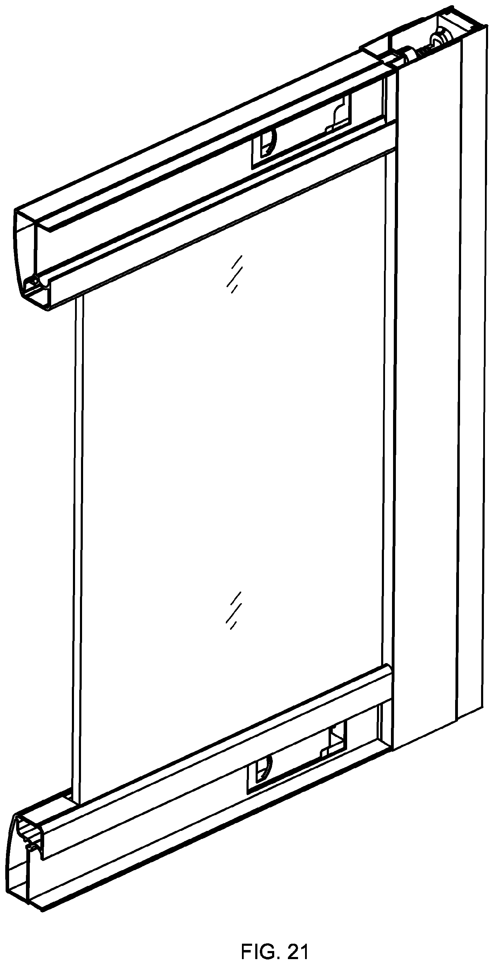

Referring to Figure 19, after the transverse frame 40, the vertical frame 30, the locking assembly 50 and the door are assembled into an adjusting frame, four wrench bodies 70 are placed in the second positions shown in Figure 19. First, the fixing frame 10 at one side is fixed, and two locking head portions 604 at that side are inserted into the corresponding passages 203 shown in Figure 20; then, the fixing frame at the other side is fixed to the wall on that side, and two locking head portions at the other side are inserted into the corresponding passages, so that the fixing frames 10 and the vertical frames 30 are connected in an inserting manner. After the adjusting frame is adjusted to a desirable state, the four wrench bodies 70 are placed in the first positions shown in Figure 21, completing the installation of the whole shower room assembly.

### Industrial Applicability

By applying the structure design of the locking device, installation of the shower room assembly provided by the present invention is very quick, which facilitates manufacturing and installation of the shower room assembly while preventing damages to the shower room assembly during installation.

## Claims

1. A locking device comprising a locking assembly (50) and an adjusting member (20), whereby
the locking assembly comprises a fixing member, a locking member (60) and a wrench body (70); the fixing member comprises a rotating chamber (511); the locking member comprises a shaft head portion (601), a main rod portion (603) and a locking head portion (604) sequentially arranged along an axis of the locking member, and is rotatably fixed on the fixing member relative to the fixing member, wherein the locking head portion extends out of the fixing member and is provided with a locking protrusion, an outer profile of which is rectangular or oblong in a cross section view; the wrench body having a hand-held portion (702);
the adjusting member comprises a fixing portion (201) and an adjusting body (202) extending outwards from the fixing portion, wherein a plastic passage (203) opening outwards is formed in the adjusting body;
**characterized in that**
the locking assembly further comprises a driving wing portion (602); the driving wing portion being located in the rotating chamber; the wrench body being hinged near the rotating chamber; the hand-held portion being at one side of a hinge (71), a first projection (703) perpendicular with the hand-held portion being at the other side of the hinge, and a second projection (704) extending in a direction parallel with the wrench body at the other side of the hinge, wherein when the wrench body is at a first position, the first projection restricts the driving wing portion at a first angular position and when the wrench body is at a second position perpendicular with the first position, the second projection drives the driving wing portion to rotate to a second angular position that is at 90 degrees with the first angular position; whereby when the driving wing portion is at the second angular position, the locking head portion is in clearance fit with the passage; and when the driving wing portion is at the first angular position, the locking protrusion is meshed into the passage.

2. The locking device according to claim 1, wherein a wall of the fixing portion is provided with a guiding portion (204) for being in tight fit with a slideway (103).

3. The locking device according to claim 1, wherein the driving wing portion has a semi-cylindrical cross section or an equilateral angle steel-like cross section, and the first and second projections are alternately arranged along an axis of the hinge.

4. The locking device according to any one of claims 1-3, wherein the locking protrusion is a set of raised lines (6041) that are axially and evenly distributed, and tops of the raised lines are on a short side surface or a large curvature surface.

5. The locking device according to claim 4, wherein the raised line has a triangular cross section.

6. The locking device according to any one of claims 1-3, wherein the locking protrusion comprises tapers that extend outwards and radially and are evenly distributed on the short side surface or the large curvature surface.

7. A shower room assembly comprising the locking device according to any one of claims 1-6, wherein comprises: a fixing frame (10) which is a section bar, and an adjusting frame comprising a transverse frame (40) and a vertical frame (30) that both are section bars, the vertical frame being inserting-connected with the fixing frame in a transverse direction;
the transverse frame comprises a vertical wall (401) provided with a wrench body operating window;
the locking assembly is fixed to the vertical wall by the fixing member of the locking assembly.

8. The shower room assembly according to claim 7, wherein a side wall of a chamber close to an installation wall (101) is provided with a slideway (103), a guiding portion (204) for being in tight fit with the slideway is provided on a wall of the fixing portion corresponding to the slideway; the transverse frame comprises an enclosed chamber (403) formed by a part of the vertical wall (401) and extending vertically and a semi-open chamber (404) located at the other side of the enclosed chamber; and the fixing member is fixed in the enclosed chamber.

## Patentansprüche

1. Verriegelungsvorrichtung, aufweisend eine Verriegelungsbaugruppe (50) und eine Justierelement (20), wobei
die Verriegelungsbaugruppe ein Befestigungselement, ein Verriegelungselement (60) und einen Schlüsselkörper (70) aufweist, wobei das Befestigungselement eine Drehkammer (511) aufweist, wobei das Verriegelungselement einen Schachtkopfabschnitt (601), einen Hauptstababschnitt (603) und einen Verriegelungskopfabschnitt (604), die sequentiell entlang einer Achse des Verriegelungselements angeordnet sind, aufweist und drehbar am Befestigungselement relativ zum Befestigungselement befestigt ist, wobei der Verriegelungskopfabschnitt sich heraus aus dem Befestigungselement erstreckt und mit einen Verriegelungsvorsprung, von dem ein Außenprofil viereckig oder länglich in einer Querschnittansicht ist, versehen ist, wobei der Schlüsselkörper einen Handabschnitt (702) hat,
das Justierelement einen Befestigungsabschnitt (201) und einen sich auswärts vom Befestigungsabschnitt erstreckenden Justierkörper (202) aufweist , wobei ein sich auswärts öffnender Kunststoffdurchgang (203) im Justierkörper gebildet wird, **dadurch gekennzeichnet, dass**
die Verriegelungsbaugruppe ferner einen Antriebsflügelabschnitt (602) aufweist, wobei der Antriebsflügelabschnitt sich in der Drehkammer befindet, der Schlüsselkörper nahe der Drehkammer angelenkt ist, der Handabschnitt sich an einer Seite eines Drehgelenks (71) befindet, ein erster zum Handabschnitt senkrechter Ansatz (703) sich an der anderen Seite des Drehgelenks befindet und ein zweiter Ansatz (704) sich in einer zum Schlüsselkörper parallelen Richtung an der anderen Seite des Drehgelenks erstreckt, wobei, wenn der Schlüsselkörper sich in einer ersten Position befindet, der erste Ansatz den Antriebsflügelabschnitt an einer ersten Winkelposition begrenzt und, wenn der Schlüsselkörper sich in einer zweiten zur ersten Position senkrechten Position befindet, der zweite Ansatz den Antriebsflügelabschnitt zu einer Drehung zu einer zweiten Winkelposition, die sich bei 90 Grad mit der ersten Winkelposition befindet, antreibt, wobei, wenn der Antriebsflügelabschnitt sich in zweiten Winkelposition befindet, der Verriegelungskopfabschnitt in Spielpassung mit dem Durchgang ist und, wenn der Antriebsflügelabschnitt sich in der ersten Winkelposition befindet, der Verriegelungsvorsprung in den Durchgang eingegriffen ist.

2. Verriegelungsvorrichtung nach Anspruch 1, wobei eine Wand des Befestigungsabschnitts mit einem Führungsabschnitt (204) zur engen Passung mit einer Führungsbahn (103) versehen ist.

3. Verriegelungsvorrichtung nach Anspruch 1, wobei der Flügelantriebsabschnitt einen halbzylindrischen Querschnitt oder einen gleichschenkligen stahlbauähnlichen Querschnitt hat und der erste und zweite Ansatz wechselweise entlang einer Achse des Drehgelenks angeordnet sind.

4. Verriegelungsvorrichtung nach einem der Ansprüche 1 bis 3, wobei der Verriegelungsvorsprung ein Satz erhobener Linien (6041) ist, die axial und gleichmäßig verteilt sind, und Spitzen der erhobenen Linien sich auf einer kurzen Seitenfläche oder einer stark gekrümmten Fläche befinden.

5. Verriegelungsvorrichtung nach Anspruch 4, wobei die erhobene Linie einen dreieckigen Querschnitt hat.

6. Verriegelungsvorrichtung nach einem der Ansprüche 1 bis 3, wobei der Verriegelungsvorsprung Kegel aufweist, die sich auswärts und radial erstrecken und gleichmäßig auf der kurzen Seitenfläche oder der stark gekrümmten Fläche verteilt sind.

7. Duschraumbaugruppe, aufweisend die Verriegelungsvorrichtung nach einem der Ansprüche 1 bis 6, wobei die Duschraumbaugruppe Folgendes aufweist: einen Befestigungsrahmen (10), der eine Profilleiste ist, und einen Justierrahmen aufweisend einen Querrahmen (40) und einen vertikalen Rahmen (30), die beide Profilleisten sind, wobei der vertikale Rahmen mit dem Befestigungsrahmen in einer Qurerichtung durch Einführung angeschlossen ist,
der Querrahmen eine vertikale, mit einem auf einen Schüsselkörper einwirkendes Fenster versehene Wand (401) aufweist,
die Verriegelungsbaugruppe an der vertikalen Wand durch das Befestigungselement der Verriegelungsbaugruppe befestigt ist.

8. Duschraumbaugruppe nach Anspruch 7, wobei eine Seitenwand einer einer Installationswand (101) nahen Kammer mit einer Führungsbahn (103) versehen ist, ein Führungsabschnitt (204), zur engen Passung mit der Führungsbahn, an einer Wand des zur Führungsbahn gehörenden Befestigungsabschnitts vorgesehen ist, wobei der Querrahmen eine umschlossene Kammer (403) aufweist, die durch einen Teil der vertikalen Wand (401) und sich vertikal erstreckend und einer halboffenen, auf der anderen Seite der umschlossenen Kammer befindlichen Kammer (404) gebildet wird, und wobei das Befestigungselement in der umschlossenen Kammer befestigt ist.

## Revendications

1. Dispositif de verrouillage comprenant un ensemble de verrouillage (50) et un élément de réglage (20), dans lequel
l'ensemble de verrouillage comprend un élément de fixation, un élément de verrouillage (60) et un corps de clé (70) ; l'élément de fixation comprend une chambre rotative (511) ; l'élément de verrouillage comprend une partie de tête d'arbre (601), une partie de tige principale (603) et une partie de tête de verrouillage (604) agencée séquentiellement le long d'un axe de l'élément de verrouillage, et est fixée de manière rotative sur l'élément de fixation par rapport à l'élément de fixation, dans lequel la partie de tête de verrouillage s'étend depuis l'élément de fixation et est pourvue d'une saillie de verrouillage dont un profil extérieur est rectangulaire ou oblong dans une vue en coupe transversale ; le corps de clé ayant une partie tenue à la main (702) ;
l'élément de réglage comprenant une partie de fixation (201) et un corps de réglage (202) s'étendant vers l'extérieur depuis la partie de fixation, dans lequel une ouverture de passage en plastique (203) vers l'extérieur est formée dans le corps de réglage ; **caractérisé en ce que**
l'ensemble de verrouillage comprend en outre une partie d'aile d'entraînement (602) ; la partie d'aile d'entraînement étant située dans la chambre rotative ; le corps de clé étant articulé près de la chambre rotative ; la partie tenue à la main étant d'un côté d'une charnière (71), une première saillie (703) perpendiculaire à la partie tenue à la main étant située de l'autre côté de la charnière, et une seconde saillie (704) s'étendant dans une direction parallèle au corps de clé à l'autre côté de la charnière, dans lequel, lorsque le corps de clé adopte une première position, la première saillie limite la partie d'aile d'entraînement dans une première position angulaire et lorsque le corps de clé adopte une seconde position perpendiculaire à la première position, la seconde saillie entraîne la partie d'aile d'entraînement à tourner vers une seconde position angulaire à 90 degrés de la première position angulaire ; de sorte que lorsque la partie d'aile d'entraînement adopte la seconde position angulaire, la partie de tête de verrouillage est ajustée avec jeu avec le passage ; et lorsque la partie d'aile d'entraînement adopte la première position angulaire, la saillie de verrouillage est engrenée dans le passage.

2. Dispositif de verrouillage selon la revendication 1, dans lequel une paroi de la partie de fixation est pourvue d'une partie de guidage (204) pour être en ajustement serré avec une glissière (103).

3. Dispositif de verrouillage selon la revendication 1, dans lequel la partie d'aile d'entraînement présente une section semi-cylindrique transversale ou une section transversale de type acier et décrivant un angle équilatéral, et les première et deuxième saillies sont disposées alternativement le long d'un axe de la charnière.

4. Dispositif de verrouillage selon l'une quelconque des revendications 1-3, dans lequel la saillie de verrouillage est un ensemble de lignes surélevées (6041) qui sont axialement et uniformément réparties, et les sommets des lignes surélevées sont sur une surface latérale courte ou une grande surface de courbure.

5. Dispositif de verrouillage selon la revendication 4, dans lequel la ligne surélevée présente une section transversale triangulaire.

6. Dispositif de verrouillage selon l'une quelconque des revendications 1-3, dans lequel la saillie de verrouillage comprend des cônes qui se prolongent vers l'extérieur et radialement et sont répartis uniformément sur la surface latérale courte ou la grande surface de courbure.

7. Ensemble de salle de douche comprenant le dispositif de verrouillage selon l'une quelconque des revendications 1-6, comprenant : un cadre de fixation (10) qui est une barre de section, et un cadre de réglage comprenant un cadre transversal (40) et un cadre vertical (30) qui sont tous deux des barres de section, le cadre vertical étant relié par insertion avec le cadre de fixation dans une direction transversale ;
le cadre transversal comprend une paroi verticale (401) pourvue d'une fenêtre d'actionnement du corps de clé ;
l'ensemble de verrouillage est fixé à la paroi verticale par l'élément de fixation de l'ensemble de verrouillage.

8. Ensemble de salle de douche selon la revendication 7, dans lequel une paroi latérale d'une chambre à proximité d'une paroi de montage (101) est munie d'une glissière (103), une partie de guidage (204) pour être en ajustement serré avec la glissière est prévue sur une paroi de la partie de fixation correspondant à la glissière ; le cadre transversal comprend une chambre fermée (403) formée par une partie de la paroi verticale (401) et s'étendant verticalement et une chambre semi-ouverte (404) située à l'autre côté de la chambre fermée ; et l'élément de fixation est fixé dans la chambre fermée.
